## Europäisches Patentamt

## European Patent Office

## Office européen des brevets

(11) Numéro de publication: **0 230 169**
**B1**

---

(12) # FASCICULE DE BREVET EUROPEEN

(45) Date de publication du fascicule du brevet:
31.05.89

(51) Int. Cl.⁴: **B60T 13/24**

(21) Numéro de dépôt: **86402629.9**

(22) Date de dépôt: **26.11.86**

---

(54) Servomoteur à dépression d'assistance au freinage.

---

(30) Priorité: **05.12.85 FR 8518009**

(43) Date de publication de la demande:
**29.07.87 Bulletin 87/31**

(45) Mention de la délivrance du brevet:
**31.05.89 Bulletin 89/22**

(84) Etats contractants désignés:
**DE ES GB IT**

(56) Documents cités:
**EP-A- 0 075 505**
**EP-A- 0 153 238**
**GB-A- 2 064 690**
**GB-A- 2 146 399**
**US-A- 3 688 647**

(73) Titulaire: **BENDIX France, 126, rue de Stalingrad,
F-93700 Drancy(FR)**

(72) Inventeur: **Carre, Jean-Jacques, 59, Boulevard de l'Est,
F-93340 Le Raincy(FR)**
Inventeur: **Levrai, Roland, 9 Bis Av. Monmousseau,
F-93240 Stains(FR)**

(74) Mandataire: **Lejet, Christian et al, Division Technique
Service Brevets BENDIX Europe 126, rue de Stalingrad,
F-93700 Drancy(FR)**

---

## Description

La présente invention concerne les servomoteurs à dépression d'assistance au freinage, pour véhicules automobiles, du type comprenant un boîtier comportant une paroi arrière et divisé intérieurement en une chambre avant ou chambre à dépression, et une chambre arrière, ou chambre de travail, par une structure de piston sollicitée par un ressort de piston vers la paroi arrière du boîtier et comprenant un moyeu renfermant un moyen de valve de distribution comportant un premier siège de clapet, formé par le moyeu, un second siège de clapet, coaxial au premier siège de clapet formé par l'extrémité d'un plongeur de valve coulissant dans un alésage central du moyeu et couplé à une tige d'actionnement du servomoteur, typiquement reliée à une pédale de freinage du véhicule, et un élément de clapet monté dans le moyeu et sollicité axialement par un ressort de clapet vers les premier et second sièges de clapet pour coopérer avec ces derniers, un ressort de rappel de tige, disposé dans le moyeu, coaxialement à la tige, et un organe de positionnement du plongeur, disposé dans un logement radial du moyeu et comportant une zone d'extrémité intérieure s'étendant dans l'alésage du plongeur et formant une surface de butée coopérant sélectivement en butée axiale avec un épaulement du plongeur, l'organe de positionnement étant placé, lorsque la structure de piston revient en position de repos au voisinage de la paroi arrière du boîtier, dans une première position limitant, par sa surface de butée, le retrait du plongeur de valve sous l'effet du ressort de rappel de tige.

Un servomoteur de ce type est décrit dans le document GB-A-2 064 690. Dans l'agencement de ce document, l'organe de positionnement est reçu avec possibilité de débattement axial dans le logement radial du moyeu et comporte des pattes externes destinées à venir porter axialement en butée contre une portion centrale de la paroi arrière du boîtier pour immobiliser en position de repos le plongeur de valve avant que la structure de piston ne vienne à son tour occuper sa position de repos, en butée contre une portion périphérique de la paroi arrière du boîtier. Avec un tel agencement, en phase finale de défreinage, le ressort de rappel de la structure de piston doit vaincre, alors qu'il se trouve en condition de compression minimale, la force du ressort de rappel de la tige d'actionnement déjà immobilisée en position de repos par l'organe de positionnement, de sorte que le ressort de rappel de piston doit être largement dimensionné, ce qui entraîne une perte de sensibilité du servomoteur lors de sa mise en oeuvre. D'autre part, dans cet agencement, la position de repos du second siège de clapet est déterminée, via l'organe de positionnement, par la portion centrale de la paroi arrière du boîtier, tandis que la position de repos du premier siège de clapet (dans le moyeu) est déterminée par la portion périphérique de la paroi arrière du boîtier, de sorte que, compte-tenu des chaînes de tolérances axiales propres à la structure de piston, d'une part, et surtout celles (difficilement maîtrisables) propres à la paroi arrière du boîtier d'autre part, l'obtention d'une course morte réduite ne peut être déterminée avec précision dans des fabrications en très grande série. En raison de ces chaînes de tolérances, le logement radial du moyeu, recevant l'organe de positionnement, doit être surdimensionné axialement, de sorte que l'organe de positionnement peut adopter, dans le logement, une position en biais suceptible d'induire, en fonctionnement, un couple indésirable sur le plongeur et de gripper ce dernier dans son alésage. La position de repos de l'organe de positionnement étant déterminée par rapport à la portion centrale de la paroi arrière du boîtier et non pas par rapport au moyeu lui-même, si le réglage de course morte du piston de maître-cylindre associé au servomoteur nécessite un réglage avec avancement axial de la structure de piston, comme décrit par exemple dans le document EP-A- 0075505, du fait que l'organe de positionnement tend à demeurer plaqué contre la paroi arrière du boîtier, une course morte réduite ne peut être conservée en raison du réglage axial de la structure de piston. Enfin, l'organe de positionnement n'étant pas plaqué contre une paroi du logement dans la position de repos, le test dit "d'arrachement" -imposé par certains constructeurs-, consistant à exercer une traction importante sur la tige d'actionnement (simulant un soulèvement de pédale accidentel par le pied d'un utilisateur du véhicule) peut entraîner une déformation non élastique de l'organe de positionnement annihilant pour la suite l'obtention d'une course morte réduite.

La présente invention a pour objet d'éviter ces inconvénients en proposant un agencement de servomoteur dans lequel la position de repos de l'organe de positionnement est déterminée par rapport au logement du moyeu, indépendamment des tolérances axiales propres à la paroi arrière du boîtier et, dans une très large mesure, des tolérances axiales propres au moyeu.

Pour ce faire, selon une caractéristique de l'invention, l'organe de positionnement comporte, opposée axialement à sa surface de butée pour l'épaulement du plongeur, au moins une surface d'appui, l'organe de positionnement étant déplaçable radialement dans le logement, en fonction du déplacement axial de la structure de piston, entre une première et une seconde positions dans lesquelles la surface d'appui est en appui respectivement contre une première et une seconde surfaces de contre-appui décalées axialement et radialement l'une de l'autre dans le moyeu et se raccordant typiquement l'une à l'autre par une surface de rampe avec laquelle coopère une surface de rampe correspondante de l'organe de positionnement se raccordant à la surface d'appui.

Selon une caractéristique plus particulière de l'invention, le servomoteur comporte un organe d'actionnement couplé à l'organe de positionnement et coopérant avec une surface de rampe stationnaire dans le boîtier pour déplacer l'organe de positionnement entre lesdites seconde et première positions.

Avec un tel agencement, lors d'une phase de freinage, l'organe de positionnement est placé dans sa deuxième position, avec sa surface d'apppui en appui contre la seconde surface de contre-appui, décalée typiquement vers l'arrière par rapport à la première surface de contre-appui, de sorte que, lors d'un relâchement de l'effort sur la tige d'actionnement, le plongeur, sous l'effet du ressort de rappel de tige, est autorisé à se déplacer axialement d'une certaine distance ample vers l'arrière avant de venir en butée contre la surface de butée de l'organe de positionnement, en ménageant ainsi une surouverture importante de l'élément de clapet favorisant un rééquilibrage rapide en pression entre les chambres du servomoteur. Par contre, en fin de phase de défreinage, lorsque la structure de piston revient vers sa position de repos au voisinage de la paroi arrière du boîtier, l'organe de positionnement est sollicité avec anticipation vers sa première position, avec sa surface d'appui venant en appui contre la première surface de contre-appui (située plus avant dans le moyeu), en réavançant ainsi le plongeur dans l'alésage du moyeu pour l'obtention d'une course morte réduite déterminée avec précision quelle que soit la position exacte de repos finalement adoptée par la structure de piston dans le boîtier et quelles que soient les tolérances axiales, et dans une large mesure, radiales de la paroi arrière du boîtier.

D'autres caractéristiques et avantages de la présente invention ressortiront de la description suivante de modes de réalisation, donnés à titre illustratif mais nullement limitatif, faite en relation avec des dessins annexés, sur lesquels :

La figure 1 est une vue en coupe longitudinale partielle d'un servomoteur selon l'invention ;

La figure 2 est une vue partielle à plus grande échelle de l'agencement de l'organe de positionnement du servomoteur de la figure 1 ;

Les figures 3 et 4 sont des vues similaires à la figure 2 montrant la disposition de l'organe de positionnement dans ses première et seconde positions, respectivement ;

La figure 5 est une vue de l'arrière de l'organe de positionnement des figures 1 à 4 ;

La figure 6 est une vue de l'avant de l'organe de contre-appui des figures 1 à 4 ;

La figure 7 est une vue du dessus de l'organe d'actionnement des figures 1 à 4 ; et

La figure 8 est une vue similaire à la figure 2 montrant un autre mode de réalisation de l'invention.

Dans la description qui va suivre et sur les dessins, les éléments identiques ou analogues sont repérés par les mêmes chiffres de référence, éventuellement indicés.

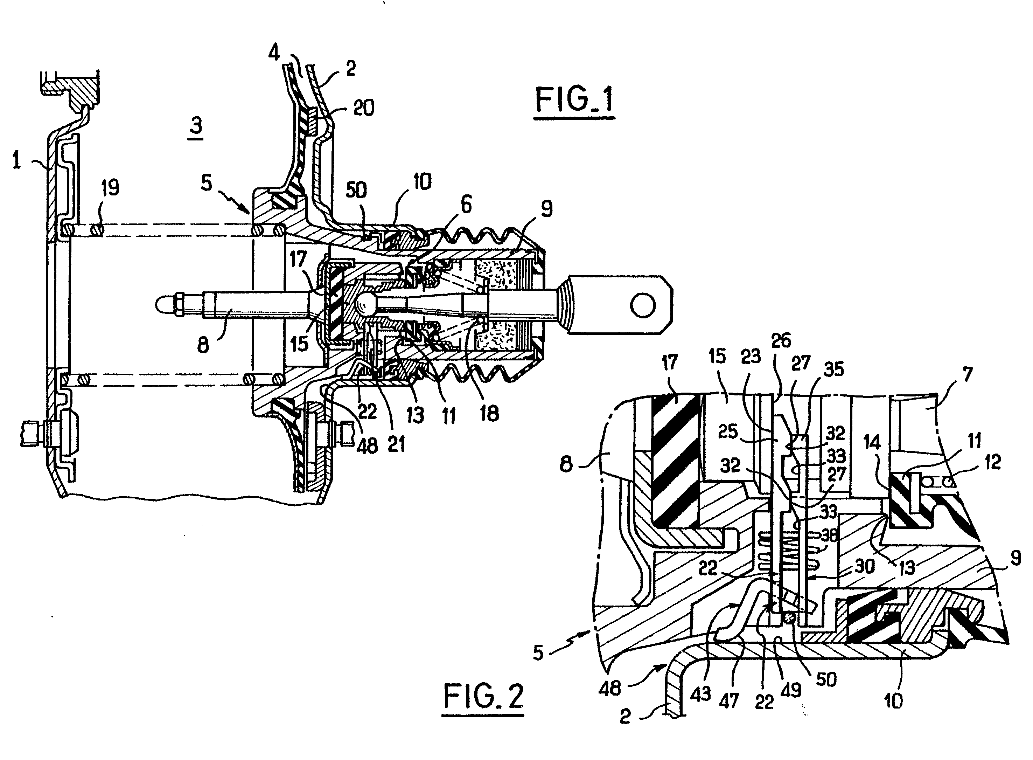

On reconnait sur la figure 1 un servomoteur à dépression d'assistance au freinage comprenant un boîtier constitué par l'assemblage périphérique étanche d'une paroi avant 1 et d'une paroi arrière 2 et divisé intérieurement en une chambre avant ou chambre à dépression 3 et une chambre arrière ou chambre de travail 4, par une structure de piston comportant un moyeu central désigné généralement par la référence 5 et renfermant un moyen de valve de distribution, désigné généralement par la référence 6, actionnable par une tige d'actionnement 7 couplée typiquement à une pédale de freinage (non représentée) d'un véhicule, pour actionner la structure de piston et, partant, un organe de sortie 8 porté par le moyeu 5 et destiné à être couplé typiquement à un piston primaire d'un maître cylindre (non représenté) associé au servomoteur.

Le moyen de valve de distribution 6, disposé typiquement dans une partie de prolongation arrière tubulaire 9 du moyeu 5 coulissant dans une cheminée arrière 10 de la paroi arrière 2 du boîtier, comprend un élément de clapet élastique 11, sollicité axialement vers l'avant par un ressort de clapet 12 pour coopérer avec un premier siège de clapet annulaire 13 formé centralement dans le moyeu 5, et avec un second siège de clapet annulaire 14, coaxial au précédent, formé par l'extrémité arrière d'un plongeur de valve 15 couplé à l'extrémité avant de la tige d'actionnement 7 et coulissant dans un alésage étagé central 16 du moyeu. Un disque de réaction 17, en matériau élastomère, est interposé entre la face avant du plongeur 15 et l'extrémité arrière de l'organe de sortie 8. Un ressort de rappel de tige 18, prenant appui dans le moyeu 5, typiquement sur le support de l'élément de clapet 11, sollicite vers l'arrière la tige d'actionnement 7, et le plongeur de valve associé 15. Un ressort de rappel de piston 19, disposé dans la chambre à dépression 3, sollicite la structure de piston vers la paroi arrière 2, la structure de piston venant porter en butée, en position inactive du servomoteur, contre cette paroi arrière 2, par exemple contre un renfort central 20 de cette paroi arrière 2.

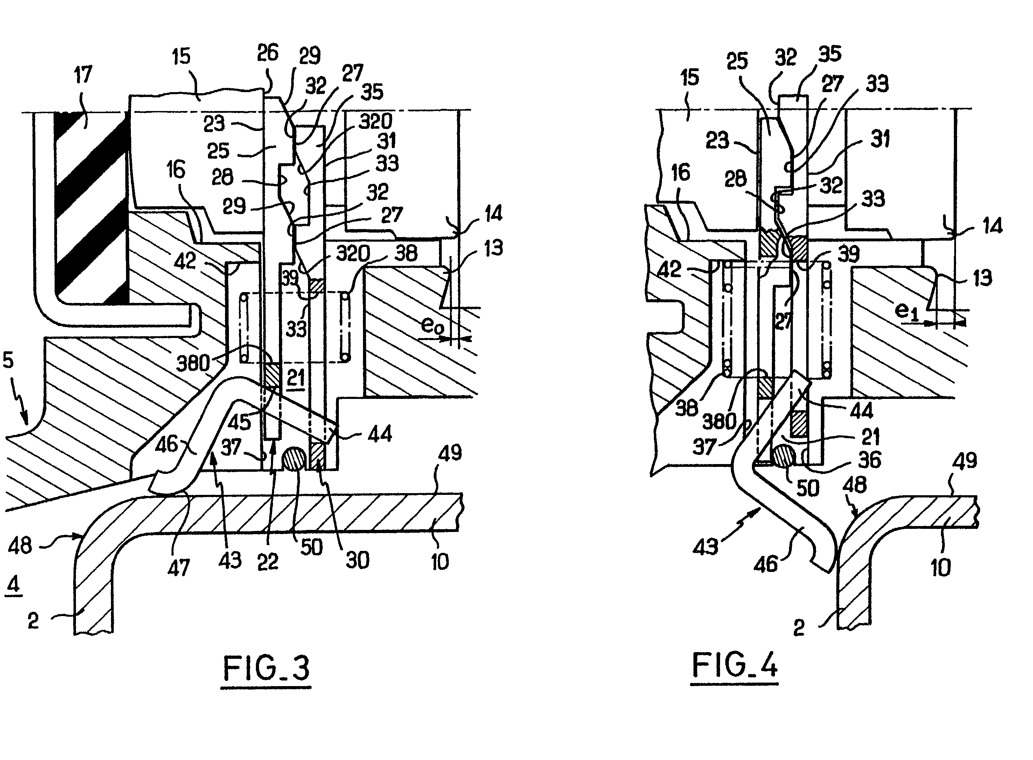

Dans un logement radial 21 du moyeu 5 débouchant dans l'alésage 16, et formant en même temps un passage de communication entre le moyen de valve 6 et la chambre de travail 4, est disposé un organe de retenue ou de positionnement de plongeur désigné généralement par la référence 22. Comme on le voit bien sur les figures 3 à 5, l'organe de positionnement 22, constitué typiquement à partir d'un élément de plaque métallique, comporte une face avant plane 23 et comporte une extrémité intérieure formée avec une découpe centrale 24 définissant deux bras 25 s'étendant partiellement dans l'alésage 16 du plongeur 15, lequel comporte une gorge périphérique centrale de diamètre correspondant à celui de la découpe 24 définissant un épaulement radial annulaire dirigé vers l'arrière 26 suceptible de coopérer en butée axiale avec la face avant 23 de l'organe de positionnement 22. Sur sa face arrière, l'organe de positionnement 22 comporte au moins une, et typiquement, dans le mode de réalisation représenté, deux premières surfaces d'appui arrière coplanaires 27 décalées axialement d'une certaine distance de la face avant 23, et une seconde surface d'appui 28, décalée radialement et axialement de la précédente, à une distance plus proche axialement que cette dernière de la face de butée avant 23. Le raccordement entre la première surface d'appui inférieure 27 et la seconde surface d'appui 28 s'effectue au moyen d'une surface de rampe 29, que l'on retrouve également entre la première surface d'appui supérieure 27 et l'extrémité adjacente des bras 25 de l'organe de positionnement 22. Dans le mode de réalisation représenté, dans le logement radial 21 du moyeu 5 est également disposé un organe de contre-appui 30 comportant une face arrière plane 31 et présentant sur sa face avant, au moins une, typiquement deux premières surfaces de contre-appui coplanaires, décalées radialement l'une de l'autre 32 et au moins une, typiquement deux seconde surfaces de contre-appui coplanaires 33 décalées radialement et axialement des précédentes, à plus courte distance, axialement de la face plane arrière 31.Le raccordement entre chaque première surface de contre-appui 32 et la seconde surface de contre-appui adjacente 33 est constitué par une surface de rampe 320 de même pente et de même extension axiale que les surfaces de rampe 29 de l'organe de positionnement 22. Comme l'organe de positionnement 22, l'organe de contre-appui 30 comporte, à son extrémité intérieure, une découpe 34 correspondant au diamètre de la gorge centrale périphérique du plongeur 15 et définissant ainsi deux bras 35 s'étendant partiellement dans l'alésage 16 de coulissement du plongeur 15. Le logement radial 21 est délimité vers l'arrière par une face plane transversale 36 formant surface d'appui et de coulissement pour la face arrière plane 31 de l'organe de contre-appui 30. Le logement 21 est délimité vers l'avant par une face plane transversale 37 formant butée axiale pour la face avant plane 23 de l'organe de positionnement 22. Dans une partie élargie centrale du logement 21 est disposé un ressort hélicoïdal 38 reçu dans des ouvertures intérieures 380 et 39 de l'organe de positionnement 22 et de l'organe de contre-appui 30, respectivement, et positionné dans ces ouvertures par des pattes 40 et 41, respectivement. Dans la partie centrale élargie du logement 21 est également aménagée une face d'appui 42 s'étendant axialement au voisinage de l'alésage 16. Aux organes de positionnement 22 et de contre-appui 30 est associé un organe d'actionnement 43, constitué typiquement sous la forme d'un élément de levier en L avec un premier bras 44 reçu en guidage dans un évidement 45 formé à l'extrémité de l'organe de positionnement 22 opposée à la découpe 24 et s'étendant au travers de l'ouverture 39 de l'organe de contre-appui 30, et un second bras ou bras palpeur 46 présentant une surface de rampe d'extrémité 47 destinée à coopérer avec une surface de rampe stationnaire dans le boîtier du servomoteur et constituée avantageusement par l'arrondi 48 de jonction entre la paroi interne 49 de la cheminée 10 et la surface interne de la portion centrale adjacente de la paroi arrière 2 du boîtier. Un organe de maintien, par exemple un jonc 50 encerclant le moyeu, est disposé entre les organes de positionnement 22 et de contre-appui 30 pour prévenir tout risque d'échappement de l'ensemble de ces organes et de l'organe d'actionnement 43.

Le fonctionnement du servomoteur selon l'invention sera maintenant décrit en référence avec les figures 3 et 4. Lors de la mise en oeuvre du servomoteur pendant une phase de freinage, où la structure de piston est déplacée vers la paroi avant 1 du boîtier à l'encontre du ressort du piston 19, l'élément de clapet 11 est maintenu contre le premier siège de clapet 13, le plongeur de valve 15 étant déplacé vers l'avant, dans l'alésage 16, en comprimant l'organe de réaction 17. Lors de cette phase de freinage, dès que le logement radial 21 a dépassé axialement vers l'avant l'arrondi 48, les organes de positionnement 22, de contre-appui 30 et d'actionnement 43 occupent la position représentée sur la figure 4, c'est à dire que, sous l'effet de la sollicitation radiale du ressort 38, l'organe de positionnement 22 occupe sa position basse extrême (ou seconde position) et l'organe de contre-appui 30 sa position haute extrême, l'organe d'actionnement 43 ayant la position basculée "sortie" représentée sur cette figure 4. Dans ces conditions, les premières surfaces d'appui 27 de l'organe de positionnement 22 sont positionnées en regard, axialement, des secondes surfaces de contre-appui 33 de l'organe de contre-appui 30, les premières surfaces de contre-appui 32 étant, elles, avantageusement en regard des secondes surfaces d'appui 28 de l'organe de positionnement 22. Dès que l'effort de freinage sur la tige d'actionnement 7 est relâché, le plongeur 15, sous l'effet du ressort de rappel de la tige 18, recule pour venir plaquer son épaulement 26 contre la face plane avant 23 de l'organe de positionnement 22, ce qui amène ainsi les première surfaces d'appui 27 en appui axial contre les seconde surfaces de contre-appui 33 et la face arrière 31 de l'organe de contre-appui 30 en appui axial contre le plan 36 dans le logement 21. Dans ces conditions un jeu important $e_1$ de surouverture au retour est créé entre le premier siège de clapet 13 et l'élément de clapet 11. Lorsque le freinage cesse complètement, et que la structure de piston revient au voisinage de la paroi arrière 2, la surface de rampe 47 de l'organe d'actionnement 43 vient rapidement en contact avec la surface de rampe stationnaire 48 en roulant sur cette dernière, causant ainsi un basculement dextrogyre (sur les dessins) de l'organe d'actionnement 43 provoquant, par le bras d'actionnement 44, un déplacement radial vers le bas de l'organe de contre-appui 30 et un déplacement corrélatif vers le haut et vers l'avant de l'organe de positionnement 22, lesdits organes adoptant la position (ou première position) représentée sur la figure 3 pendant toute la phase ultime de déplacement de la structure de piston vers sa position de repos jusqu'à ce qu'elle atteigne cette dernière. Le coulissement radial antagoniste des organes de positionnement 22 et de contre- appui 30 provoque en effet, par glissement l'une contre l'autre des surfaces de rampes 29 et 320, un écartement axial entre ces organes ramenant le plongeur 15 vers l'avant dans son alésage 16 jusqu'à obtention de la position représentée sur la figure 3, avec les premières surfaces d'appui 27 de l'organe de positionnement 22 en appui contre les premières surfaces de contre-appui 32 de l'organe de contre-appui 30, lequel est maintenu plaqué axialement par sa face arrière 31 contre le plan 36 du logement 21, position dans laquelle le jeu $e_0$ entre le premier siège de clapet 13 et l'élément de clapet 11 est réduit à une valeur minimum déterminée avec précision par la distance axiale entre les plans des première (32) et seconde (33) surfaces de contre-appui de l'organe de contre-appui 30 et par les tolérances (extrêmement réduites) d'épaisseur des organes de positionnement et de contre-appui et entre la face 36 et le premier siège (adjacent) 13. On notera que, conformément à l'objet de la présente invention, cette position de repos de la figure 3 est indépendante du positionnement axial du logement 21 et des organes de positionnement 22 et de contre-appui 30 par rapport à la géométrie axiale de la paroi arrière 2 du boîtier, ainsi que, dans une large mesure, de l'extension radiale des surfaces d'appui 27 et de contre-appui 32 et 33.

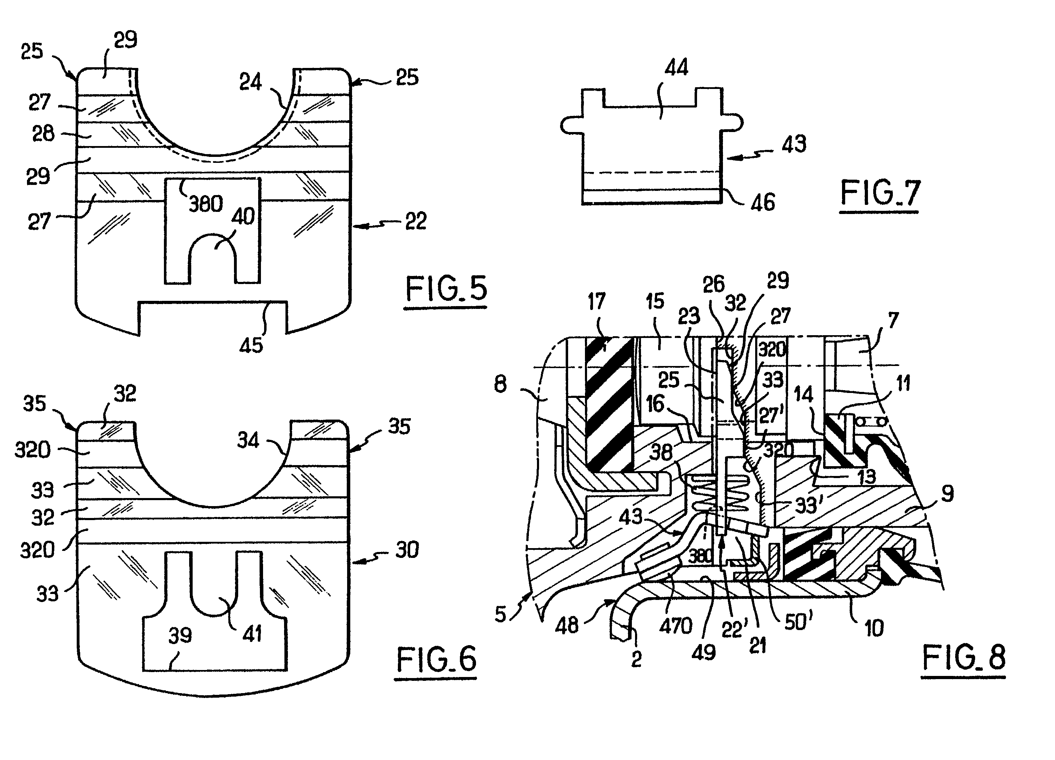

On a représenté sur la figure 8 un mode de réalisation simplifié dans lequel les surfaces de contre-appui sont formées directement dans le moyeu. Dans ce mode de réalisation, l'organe de positionnement 22′ comporte une paire de surfaces d'appui 27, 27′ décalées l'une de l'autre non seulement radialement mais également axialement, la seconde surface d'appui ou surface d'appui inférieure 27′ portant également, dans la position de repos représentée, correspondant à celle de la figure 3 dans le mode de réalisation précédent, contre la seconde surface de contre-appui supérieure 33 formée dans le logement 21 du moyeu. Le bras d'actionnement de l'organe d'actionnement 43 a, dans ce mode de réalisation, son extrémité libre pivotant en appui sur un organe de maintien 50' encerclant le moyeu mais présentant ici une section en forme de L, l'aile axiale de cet organe de maintien formant une butée radiale pour l'extrémité inférieure de l'organe de retenue 22' dans sa seconde position (fournissant un jeu de surouverture) dans laquelle la première surface d'appui supérieure 27 porte en appui contre la seconde surface de contre-appui supérieure 33, la première surface d'appui inférieure 27' portant alors contre la seconde surface de contre-appui inférieure 33' décalée axialement vers l'arrière de la seconde surface de contre-appui supérieure 33. Le mode de fonctionneement du dispositif de la figure 8 est par ailleurs en tout point identique à celui décrit précédemment en relation avec les figures 1 à 7. On notera, sur cette figure 8, que la surface de rampe de l'organe d'actionnement 43 est avantageusement constituée par un insert en matériau plastique 470 présentant une surface de contact arrondie, également applicable à l'organe d'actionnement 43 du mode de réalisation précédent.

## Revendications

1. Servomoteur à dépression d'assistance au freinage, comprenant : un boîtier comportant une paroi arrière (2) et divisé intérieurement en une chambre à dépression (3) et une chambre de travail (4) par une structure de piston, sollicitée par un ressort de piston (19) vers la paroi arrière du boîtier et comprenant un moyeu (5) renfermant un moyen de valve de distribution (6) comportant un premier siège de clapet (13), formé par le moyeu, un second siège de clapet (14), coaxial au premier siège de clapet et formé par l'extrémité d'un plongeur de valve (15) coulissant dans un alésage (16) du moyeu et couplé à une tige d'actionnement (7) du servomoteur, un élément de clapet (11) monté dans le moyeu et sollicité axialement par un ressort de clapet (12) vers les premier (13) et second (14) sièges de clapet pour coopérer avec ces derniers, un ressort de rappel de tige (18), disposé dans le moyeu, coaxialement à la tige (7), et un organe de positionnement de plongeur (22 ; 22′), disposé dans un logement radial (21) du moyeu et comportant une zone d'extrémité intérieure (25) s'étendant dans l'alésage (16) du plongeur (15) et formant une surface de butée (23) coopérant sélectivement en butée axiale avec un épaulement (26) du plongeur, l'organe de positionnement (22 ; 22′) étant placé, lorsque la structure de piston revient en position de repos au voisinage de la paroi arrière (2) du boîtier, dans une première position limitant, par sa surface de butée (23), le retrait du plongeur (15) sous l'effet du ressort de rappel de tige (18), caractérisé en ce que l'organe de positionnement (22 ; 22′) comporte, opposée axialement à la surface de butée (23), au moins une surface d'appui (27), l'organe de positionnement étant déplaçable radialement dans le logement (21), en fonction du déplacement axial de la structure de piston, entre des première et seconde positions dans lesquelles la surface d'appui (27) est en appui respectivement contre une première (32) et une seconde (33) surfaces de contre-appui décalées axialement et radialement l'une de l'autre dans le moyeu.

2. Servomoteur selon la revendication 1 caractérisé en ce que les première (32) et seconde (33) surfaces de contre-appui se raccordent l'une à l'autre par une surface de rampe (320) l'organe de positionnement (22 ; 22′) comportant une surface de rampe correspondante (29) se raccordant à la surface d'appui (27).

3. Servomoteur selon la revendication 1 ou la revendication 2, caractérisé en ce qu'il comporte un organe d'actionnement (43) couplé à l'organe de positionnement (22 ; 22′) et coopérant avec une surface de rampe stationnaire (48) dans le boîtier pour déplacer l'organe de positionnement entre lesdites seconde et première positions.

4. Servomoteur selon l'une des revendications 1 à 3, caractérisé en ce qu'il comporte un organe élastique (38) sollicitant radialement l'organe de positionnement (22 ; 22′) vers sa seconde position.

5. Servomoteur selon la revendication 4, caractérisé en ce qu'il comporte un organe de maintien (50 ; 50′) de l'organe de positionnement (22 ; 22′) dans le logement (21) du moyeu.

6. Servomoteur selon la revendication 5, caractérisé en ce que l'organe d'actionnement (43) est un organe de levier basculant comportant un bras palpeur (46), coopérant avec la surface de rampe stationnaire (48), et un bras d'actionnement (44) coopérant avec l'extrémité extérieure (45) de l'organe de positionnement (22, 22′).

7. Servomoteur selon l'une quelconque des revendications précédentes, caractérisé en ce que les première (32) et seconde (33) surfaces de contre-appui sont formées par une paroi arrière du logement (21).

8. Servomoteur selon l'une quelconque des revendications 1 à 6, caractérisé en ce que les première (32) et seconde (33) surfaces de contre-appui sont formées par un organe de contre-appui (30) disposé dans le logement (21).

9. Servomoteur selon la revendication 8, caractérisé en ce que l'organe de contre-appui (30) est monté de façon à pouvoir se déplacer radialement

9            EP 0 230 169 B1            10

dans le logement (21) et est actionnable radialement, en antagonisme du déplacement radial de l'organe de positionnement (22) par l'organe d'actionnement (43)

10. Servomoteur selon l'une quelconque des revendications précédentes, caractérisé en ce que l'organe de positionnement (22) comporte une paire de dites surfaces d'appui (27; 27, 27′) coopérant respectivement avec une paire de dites premières (32) et secondes (33; 33′) surfaces de contre-appui.

11. Servomoteur selon la revendication 10, caractérisé en ce que les surfaces d'appui (27) de ladite paire sont coplanaires.

12. Servomoteur selon l'une quelconque des revendications précédentes, caractérisé en ce que l'organe de positionnement (22 ; 22′) est formé à partir d'une plaque métallique.

13. Servomoteur selon l'une des revendications 8 à 10, caractérisé en ce que l'organe de contre-appui (30) est formé à partir d'une plaque métallique.

14. Servomoteur selon l'une des revendications 3 à 13, caractérisé en ce que la surface de rampe stationnaire (48) est formée par un arrondi (48) de raccordement entre une cheminée centrale tubulaire (10) de la paroi arrière (2) et une portion adjacente de cette paroi arrière (2).

**Patentansprüche**

1. Unterdruckbremskraftverstärker mit einem Gehäuse, das eine rückwärtige Wand (2) aufweist und im Inneren in eine Unterdruckkammer (3) und eine Arbeitskammer (4) von einer Kolbenanordnung unterteilt ist, die von einer Kolbenfeder (19) in Richtung auf die rückwärtige Wand des Gehäuses vorgespannt ist und eine Nabe (5) aufweist, die eine Verteilerventileinrichtung (6) einschließt, wobei die Verteilerventileinrichtung besteht aus einem ersten Ventilsitz (13), der von der Nabe gebildet wird, einem zweiten Ventilsitz (14), der koaxial zum ersten Ventilsitz ist und von dem Ende eines Ventilstößels (15) gebildet wird, der in einer Bohrung (16) der Nabe gleitet und mit einer Betätigungsstange (7) des Servomotors gekoppelt ist, einem Ventilglied (11), das in der Nabe angeordnet ist und von einer Ventilfeder (12) axial in Richtung auf den ersten (13) und zweiten (14) Ventilsitz vorgespannt wird, um mit diesen zusammenzuwirken, einer Stangen-Rückholfeder (18), die in der Nabe koaxial zu der Stange (7) angeordnet ist, und einem Positionierungsglied (22; 22′) für den Stößel, das in einer radialen Aufnahme (21) der Nabe angeordnet ist und einen inneren Endbereich (25) aufweist, der in die Bohrung (16) des Stößels (15) hinein verläuft und eine Anlagefläche (23) bildet, welche wahlweise anlagemäßig mit einer Schulter (26) des Stößels zusammenwirkt, wobei das Positionierungsglied (22; 22′), wenn die Kolbenanordnung in ihre Ruhestellung benachbart zur rückwärtigen Wand (2) des Gehäuses zurückkehrt, in einer ersten Stellung angeordnet ist, die durch seine Anlagefläche (23) die Rückkehrbewegung des Stößels (15) unter der Wirkung der Stangen-Rückholfeder (18) begrenzt, dadurch gekennzeichnet, daß das Positionierungsglied (22; 22′) axial gegenüber der Anlagefläche (23) mindestens eine Anschlagfläche (27) aufweist, wobei das Positionierungsglied in Abhängigkeit von einer Axialverschiebung der Kolbenanordnung radial in die Aufnahme (21) zwischen der ersten und zweiten Stellung verschiebbar ist, in denen die Anschlagfläche (27) an einer ersten (32) bzw. zweiten (33) Gegenfläche anliegt, die axial und radial relativ zueinander in der Nabe versetzt sind.

2. Bremskraftverstärker nach Anspruch 1, dadurch gekennzeichnet, daß die erste Gegenfläche (32) und die zweite Gegenfläche (33) über eine Rampenfläche (23) aneinander angeschlossen sind, wobei das Positionierungsglied (22; 22′) eine entsprechende Rampenfläche (29) aufweist, die sich an die Anschlagfläche (27) anschließt.

3. Bremskraftverstärker nach Anspruch 1 oder 2, dadurch gekennzeichnet, daß er ein Betätigungsglied (43) aufweist, das mit dem Positionierungsglied (22; 22′) verbunden ist und mit einer stationären Rampenfläche (48) in dem Gehäuse zusammenwirkt, um das Positionierungsglied zwischen der ersten und zweiten Stellung zu verschieben.

4. Bremskraftverstärker nach einem der Ansprüche 1–3, dadurch gekennzeichnet, daß er ein elastisches Glied (38) aufweist, das das Positionierungsglied (22; 22′) in seine zweite Stellung radial vorspannt.

5. Bremskraftverstärker nach Anspruch 4, dadurch gekennzeichnet, daß er ein Halteglied (50; 50′) aufweist, das das Positionierungsglied (22; 22′) in der Aufnahme (21) der Nabe hält.

6. Bremskraftverstärker nach Anspruch 5, dadurch gekennzeichnet, daß das Betätigungsglied (43) ein Kipphebel ist, der einen mit der stationären Rampenfläche (48) zusammenwirkenden Fühlarm (46) und einen mit dem äußeren Ende (45) des Positionierungsgliedes (22; 22′) zusammenwirkenden Betätigungsarm (44) aufweist.

7. Bremskraftverstärker nach einem der vorhergehenden Ansprüche, dadurch gekennzeichnet, daß die erste Gegenfläche (32) und die zweite Gegenfläche (33) von einer rückwärtigen Wand der Aufnahme (21) gebildet wird.

8. Bremskraftverstärker nach einem der Ansprüche 1–6, dadurch gekennzeichnet, daß die erste Gegenfläche (32) und die zweite Gegenfläche (33) von einem Gegenglied (30) gebildet werden, das in der Aufnahme (21) angeordnet ist.

9. Bremskraftverstärker nach Anspruch 8, dadurch gekennzeichnet, daß das Gegenglied (30) so gelagert ist, daß es sich in der Aufnahme (21) radial verschieben kann und entgegen einer radialen Verschiebung des Positionierungsgliedes (22) durch das Betätigungsglied (43) radial betätigbar ist.

10. Bremskraftverstärker nach einem der vorhergehenden Ansprüche, dadurch gekennzeichnet, daß das Positionierungsglied (22) ein Paar der besagten Anschlagflächen (27; 27, 27′) aufweist, das mit einem Paar der ersten (32) bzw. zweiten (33; 33′) Gegenfläche zusammenwirkt.

11. Bremskraftverstärker nach Anspruch 10, dadurch gekennzeichnet, daß die Anschlagflächen (27) des besagten Paares koplanar sind.

6

12. Bremskraftverstärker nach einem der vorhergehenden Ansprüche, dadurch gekennzeichnet, daß das Positionierungsglied (22; 22') aus einem Blech hergestellt ist.

13. Bremskraftverstärker nach einem der Ansprüche 8–10, dadurch gekennzeichnet, daß das Gegenglied (30) aus einem Blech hergestellt ist.

14. Bremskraftverstärker nach einem der Ansprüche 3–13, dadurch gekennzeichnet, daß die stationäre Rampenfläche (48) von einer Abrundung (48) gebildet wird, die einen zentralen rohrförmigen Mantel (10) der rückwärtigen Wand (2) mit einem angrenzenden Abschnitt der rückwärtigen Wand (2) verbindet.

## Claims

1. Vacuum brake-booster, comprising: a housing having a rear wall (2) and divided internally into a vacuum chamber (3) and a working chamber (4) by a piston structure biased by a piston spring (19) towards the rear wall of the housing and comprising a hub (5) enclosing a distribution valve means (6) having a first valve seat (13) formed by the hub, a second valve seat (14) coaxial to the first valve seat and formed by the end of a valve plunger (15) sliding in a bore (16) of the hub and coupled to an actuating rod (7) of the booster, a valve member (11) mounted in the hub and biased axially by a valve spring (12) towards the first (13) and second (14) valve seats, to cooperate with the latter, a rod return spring (18) arranged in the hub coaxially to said rod (7), and a plunger-positioning member (22; 22') arranged in a radial recess (21) in the hub and having an inner end zone (25) extending into the bore (16) of the plunger (15) and forming a stop surface (23) cooperating selectively in axial bearing engagement with a shoulder (26) of the plunger, the positioning member (22; 22'), when the piston structure returns into its rest position in the vicinity of the rear wall (2) of the housing, being placed in a first position which, by means of its stop surface (23), limits the retraction of the plunger (15) under the effect of the rod return spring (18), characterized in that the positioning member (22; 22') has, axially opposite the stop surface (23), at least one bearing surface (27), the positioning member being radially displaceable in the recess (21), as a function of the axial displacement of the piston structure, between the first and the second positions, in which the bearing surface (27) is respectively up against a first (32) and a second (33) counterbearing surface which are offset axially and radially relative to one another in the hub.

2. Booster according to Claim 1, characterized in that the first (32) and second (33) counter-bearing surfaces are joined to one another by means of a ramp surface (23), the positioning member (22; 22') having a corresponding ramp surface (29) connected to the bearing surface (27).

3. Booster according to Claim 1 or Claim 2, characterized in that it comprises an actuating member (43) coupled to the positioning member (22; 22') and interacting with a stationary ramp surface (48) in the housing, to displace the positioning member between the said second and first positions.

4. Booster according to any of Claims 1 to 3, characterized in that it comprises an elastic member (38) biasing the positioning member (22; 22') radially towards its second position.

5. Booster according to Claim 4, characterized in that it comprises a retaining member (50; 50') retaining the positioning member (22; 22') in the recess (21) in the hub.

6. Booster according to Claim 5, characterized in that the actuating member (43) is a tilting lever member having a feeler arm (46), cooperating with the stationary ramp surface (48), and an actuating arm (44) cooperating with the outer end (45) of the positioning member (22, 22').

7. Booster according to any of the preceding claims, characterized in that the first (32) and second (33) counter-bearing surfaces are formed by a rear wall of the recess (21).

8. Booster according to any of Claims 1 to 6, characterized in that the first (32) and the second (33) counterbearing surfaces are formed by a counter-bearing member (30) arranged in the recess (21).

9. Booster according to Claim 8, characterized in that the counter-bearing member (30) is mounted radially displaceably in the recess (21) and is radially actuatable counter to the radial displacement of the positioning member (22) by means of the actuating member (43).

10. Booster according to any of the preceding claims, characterized in that the positioning member (22) has a pair of said bearing surfaces (27; 27, 27') cooperating respectively with a pair of said first (32) and second (33; 33') counter-bearing surfaces.

11. Booster according to Claim 10, characterized in that the bearing surfaces (27) of said pair are coplanar.

12. Booster according to any of the preceding claims, characterized in that the positioning member (22; 22') is formed from a metal plate.

13. Booster according to any of Claims 8 to 10, characterized in that the counter-bearing member (30) is formed from a metal plate.

14. Booster according to any of Claims 3 to 13, characterized in that the stationary ramp surface (48) is formed by a rounded junction (48) between a tubular central sleeve (10) of the rear wall (2) and an adjacent portion of the rear wall (2).

FIG.1

FIG.2

FIG_3

FIG_4

FIG.7

FIG.8

FIG.5

FIG.6